# EUROPEAN PATENT APPLICATION

(11) **EP 2 910 936 A1**
(43) Date of publication of application: **26.08.2015**
(21) Application number: 14156430.2
(22) Date of filing: 24.02.2014
(51) Int. Cl.: G01N 21/956

(54) **Inspecting nanostructures**

(71) Applicant: Fundacio Privada Institut Catala de Nanociencia I Nanotecnologia (ICN2), 08193 Bellaterra (Barcelona) (ES); Institució Catalana de Recerca i Estudis Avançats, 08010 Barcelona (ES); Kehoe, Timothy, 4 Dublin (IE)
(72) Inventor: Kehoe, Timothy, Dublin, 4 (IE); Sotomayor Torres, Clivia Marfa, 42553 Velbert (DE); Delgado Simao, Claudia Custodia, 08012 Barcelona (ES); Gomis Brescó, Jordi, 08242 Manresa (ES)
(74) Representative: ZBM Patents - Zea, Barlocci & Markvardsen

(57) **Abstract**

Device for inspecting an array of nanostructures with periodic pattern repetitions, comprising: a focusing optical element arranged for focusing a first paraxial, collimated laser beam with a first waist to a focal point; an aspheric lens arranged for transforming the focused laser beam into a second paraxial, collimated laser beam with a waist smaller than the first waist for illuminating a plurality of the pattern repetitions, and for collecting a diffracted laser light caused by diffraction of the second laser beam in the illuminated pattern repetitions; a redirecting optical element arranged for redirecting at least part of the diffracted laser light from the aspheric lens to a far field sensing device for obtaining a diffraction pattern and comparing the obtained diffraction pattern to a reference diffraction pattern.

## Description

The present disclosure relates to devices for inspecting an array of nanostructures with periodic repetitions of a pattern.

### BACKGROUND

Inspection of materials/structures in nanotechnology may be performed by using imaging techniques such as scanning electron microscopy (SEM) or atomic force microscopy (AFM). Nevertheless, these imaging techniques may be slow, so they are typically used ex situ, i.e. outside the nanofabrication process.

There exist optical non-imaging techniques which are based on analysing an optical behaviour of materials, instead of "directly" measuring nanosized objects (as the above mentioned imaging techniques do). This optical inspection approach may be fast enough to be used in situ, i.e. during the nanofabrication process. An example of such optical non-imaging devices are scatterometers.

These optical non-imaging techniques are based on illuminating a periodically nanostructured material (i.e. an array of nanostructures with periodic repetitions of a pattern) with laser light, collecting the laser light which has been diffracted in the material, and analysing the collected light.

These kind of optical non-imaging systems typically comprise rather complex optical configurations. For example, some of these inspection systems may be based on a channel for illumination and another channel for collection, said channels having unshared optical elements. This may make the system bulky and expensive. These bulky systems may thus not be suitably placed (e.g. as close as possible to a material under inspection) in a nanofabrication chain with the aim of using it in situ (i.e. during the nanofabrication process).

Diffraction of laser light in a nanostructure may produce a plurality of diffraction orders. Some of these optical inspection systems are limited to small numerical apertures for collecting the diffracted light, such that the collection angle may be rather small. These inspection systems may therefore detect only the zeroth diffraction order or just a little more than the zeroth order. This reduces the amount of information that can be obtained about the nanostructures that are causing the diffraction, and may therefore limit their usefulness in detecting formation/defectivity of nanostructures.

Some of these optical inspection systems may comprise some movable collection element(s), such that their motion may permit collection of diffracted light under larger collection angles. This also may cause the system to be bulky and expensive. Moreover, motion of the collecting element(s) through a desired collection angle may be time consuming, which makes the system not suitable for in situ applications where fast (e.g. millisecond) operation is required.

Furthermore, some of the said optical inspection systems may comprise one or more microscope objectives, which are based on complex configurations of lenses and so may be of significant cost. This may make the inspection system expensive.

### SUMMARY

In a first aspect, a device for inspecting an array of nanostructures with periodic repetitions of a pattern is provided, said device solving at least some of the abovementioned problems. The device comprises a focusing optical element, an aspheric lens, and a redirecting optical element. The focusing optical element is arranged for receiving and focusing a first paraxial, collimated laser beam with a first waist to a focal point.

The aspheric lens is arranged for transforming the focused laser beam into a second paraxial, collimated laser beam with a waist smaller than the first waist for illuminating a plurality of the pattern repetitions, and for collecting a diffracted laser light caused by diffraction of the second paraxial, collimated laser beam in the illuminated pattern repetitions.

The redirecting optical element (which is configured for at least partially transmitting light and at least partially reflecting light) is arranged between the focusing optical element and the aspheric lens for redirecting at least part of the diffracted laser light from the aspheric lens to a far field sensing device for obtaining a diffraction pattern and comparing the obtained diffraction pattern to a reference diffraction pattern.

The focusing optical element and the aspheric lens may be seen as constituting together an "inverse" beam expander having the role of reducing the waist of the first (or input) laser beam. The word "inverse" may be used in the sense that this beam expander reduces (instead of increasing) the waist of the input laser beam. Suitable focal lengths for these two optical elements may permit a desired reduction of the input laser beam waist, without changing its collimation degree, depending on the intended application. The focusing optical element and the aspheric lens may be arranged separated by the sum of their respective focal lengths.

Consider e.g. that the focusing optical element has a focal length f1 and the aspheric lens has a focal length f2. Demagnification (or reduction) of the input laser beam waist may be determined by the ratio of the focal lengths (f1/f2). If a demagnification of e.g. 50 is required depending on the waist of the input laser beam and a target waist for the second (or incident) laser beam, focal lengths f1 and f2 may be those which satisfy f1/f2 = 50.

Therefore, an incident laser beam with a spot size (to vertically impinge on the array to be inspected) of e.g. 100 µm may be achieved by selecting a suitable waist for the input laser beam and suitable focal lengths for the focusing optical element and the aspheric lens. There are aspheric lenses available having suitable focal lengths for achieving beam demagnification of the abovementioned ratios.

An aspect of the proposed device is that the aspheric lens plays a double role: the abovementioned generation of the incident laser beam (by participating in the "inverse" beam expander), and collection of the diffracted laser light caused by diffraction of the incident laser beam in at least part of the array under inspection.

The solid angle collected may be determined by the numerical aperture of the optical element responsible for collection (i.e. the aspheric lens). It is known that there are aspheric lenses available with numerical apertures that may cover significantly wide collection solid angles. For example, an aspheric lens with a numerical aperture of between 0.18 and 1.00, preferably between 0.18 and 0.86, may be useful according to the intended purpose(s) of the inspecting device, depending on the desired application.

The above double role played by the aspheric lens permits the use of a single channel for both incident beam generation and collection processes. This assists in minimizing the size of the device, as well as in maximizing the speed at which the device may operate. Therefore, the proposed device may be particularly suitable for in situ applications, since it may be easily placed in an appropriate location (e.g. as close as possible to the material to be inspected) within a nanofabrication chain (due to its reduced size), while satisfying restricted time requirements associated with nanofabrication (due to its fast operation).

Aspheric lenses are typically cheaper than microscope objectives which are widely used in known optical imaging and non-imaging systems. Therefore, a further advantage of the proposed inspecting device may be cost reduction.

Moreover, microscope objectives do not normally provide focal values for both sides of the lens, as they are typically designed to be used only in one direction.

The complexity of microscope objectives (formed by a collection of lenses grouped in a single "black box"), does not allow predicting their focal distances for taking them into account in the design of the inspecting device. Moreover, aspheric lenses (which comprise a single element) are significantly less complex than microscope objectives. Therefore, design of the inspecting device's optics may be simpler and faster.

With respect to the nature of the first and second laser beams (i.e. paraxial and collimated laser beams), this may permit the incident laser beam to be a substantially well-collimated plane wave, which may result in a substantially well-defined distribution of diffraction orders. This may thus permit obtaining a substantially well-defined diffraction pattern so that the inspecting device may provide accurate enough results.

According to the previous considerations, the proposed inspecting device may be suitable for different in situ applications (i.e. during nanofabrication). For example, the device may be used to detect defectivity in nanostructures and/or formation of nanostructures with dimensions below the wavelength of the input laser beam in arrays of nanostructures with periodic repetitions of a pattern. In both applications, the proposed device may be used as an in situ tool for quality control during industrial manufacturing of materials based on e.g. nanoimprinting lithography, block copolymers directed self-assembly, etc.

In some examples, the inspecting device may further comprise a magnification lens arranged for magnifying the at least part of the diffracted laser light from the redirecting optical element, such that the diffracted laser light (from the redirecting optical element) is provided magnified to the far field sensing device. The magnification lens permits creating a magnified image of the inspected array in an intermediated plane. The aspheric lens and the magnification lens may therefore be seen as constituting a high magnification microscope able to create a divergent far field beam which may be more accurately "measured" by the far field sensing device.

According to some examples, each of the first and second laser beams may be a Gaussian single mode visible, infrared or ultraviolet laser beam. This feature may permit obtaining the diffraction pattern (to be compared to the reference diffraction pattern) comprising well separated diffraction orders, i.e. without "disturbing" overlaps between them. This characteristic may also permit, in examples of the device having the magnification lens, a smaller distance required between the magnification lens and the sensing device while keeping its precision/accuracy.

In examples of the inspecting device, each of the first and second laser beams may have a spectral line width below 1% of its wavelength (i.e. laser beams of high spectral purity). This may permit obtaining an improved univocal relation between the inspected nanostructure and corresponding diffraction orders intensities in the obtained diffraction pattern. This feature may thus increase the precision/accuracy of the inspecting device.

In some implementations, the far field sensing device may be comprised in the inspecting device or, in others, may be external. The far field sensing device may be e.g. a far field CCD camera.

In some examples, the device may further comprise a laser light source for providing the input (or first) laser beam. This light source may comprise a laser light emitter, a collimating optical element, and an optical fibre. The laser light emitter may be arranged for providing an initial laser beam. The optical fibre may be arranged for guiding the initial laser beam from the laser light emitter towards the collimating element. The collimating element may be arranged for collimating the initial laser beam from the optical fibre such that the input laser beam is suitably provided.

With this configuration, two parts of the device "connected" by the optical fibre may be distinguished. A first of these parts may be the one dedicated to reducing the waist of the input laser beam and to collecting the diffracted light. A second of these parts may be the laser emitter, which may be a significantly bulky and heavy part.

This particular configuration may thus permit placing only said first part sufficiently close to the nanostructured material to be inspected, whereas the second part (laser emitter) may be placed in a "remote" location with respect to the first part. Taking this into account, the device may thus be integrated in a nanofabrication chain more easily and efficiently.

In examples of the device, the collimating optical element may be an elliptical mirror arranged for reflecting the laser beam from the optical fibre in such a way that it is reflected collimated towards the focusing optical element. The elliptical mirror is a reflective element which does not have chromatic aberration, in contrast to refractive elements (e.g. lenses). The elliptical mirror may therefore behave in the same way irrespective of the laser wavelength (i.e. colour) used. This may allow the laser light to be changed, or two or more lasers to be coupled together to the same optical fibre output, depending on the intended application.

### BRIEF DESCRIPTION OF THE DRAWINGS

Non-limiting examples of the present disclosure will be described in the following, with reference to the appended drawings, in which:
Figure 1 is a schematic representation illustrating an inspecting device according to some examples and illumination of at least part of a nanostructure by the inspecting device; and
Figure 2 is a schematic representation of the device of Figure 1 illustrating collection of diffracted laser light from the nanostructure.

### DETAILED DESCRIPTION OF EXAMPLES

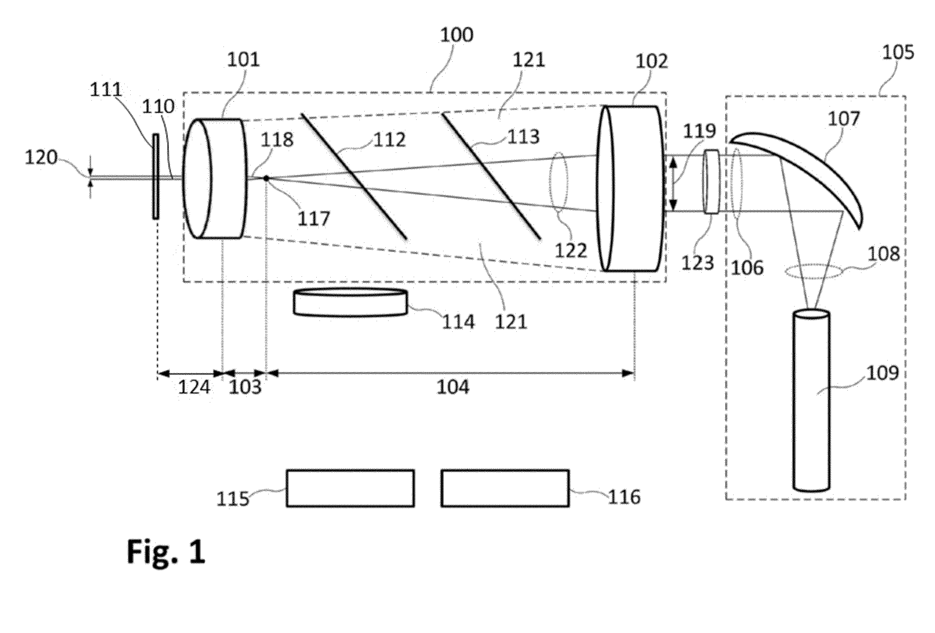

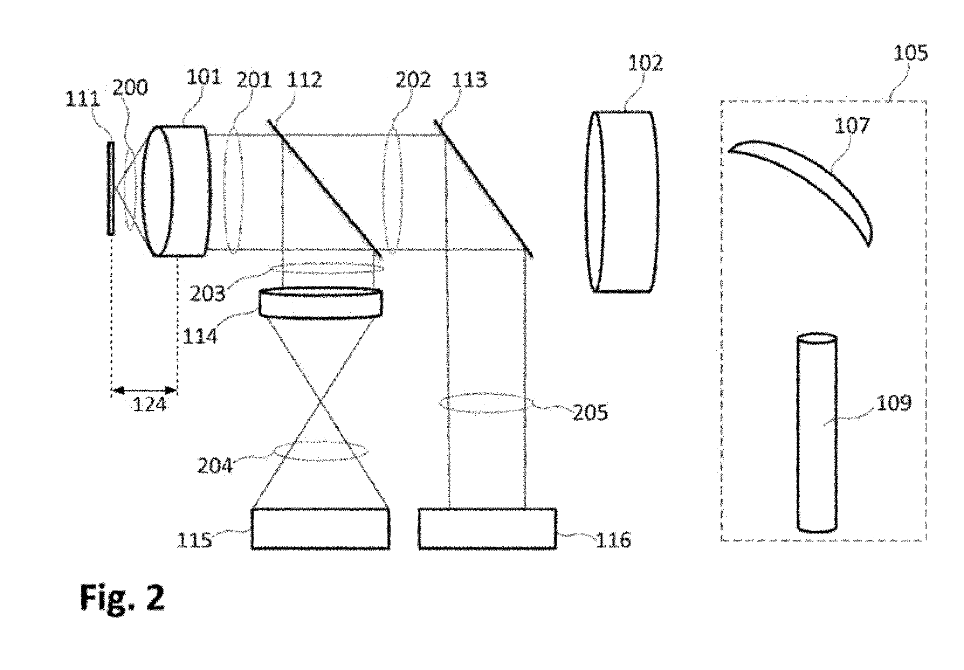

Figure 1 schematically represents a device for inspecting an array of nanostructures with periodic repetitions of a pattern 111, according to some examples. Figure 1 further illustrates illumination of the nanostructure 111 performed by the inspecting device. Figure 2 illustrates collection of diffracted laser light 200 from the nanostructure 111 also performed by said inspecting device. Reference numbers used in Figure 1 have been re-used in Figure 2 for indicating identical or similar elements.

Different examples of the device will be explained below with reference to both Figure 1 and Figure 2.

The inspecting device may comprise, as shown in Figure 1, a focusing optical element 102, an aspheric lens 101, a redirecting optical element 112, and a magnification lens 114. The focusing optical element 102 may be arranged for focusing an input laser beam 106 collimated and with a first waist 119 to a focal point 117. The aspheric lens 101 may be arranged for transforming the focused input laser beam 118 into an incident laser beam 110 collimated and with a waist 120 smaller than the first waist 119 for illuminating a plurality of the pattern repetitions 111. The aspheric lens 101 may be further arranged for collecting a diffracted laser light 200 caused by diffraction of the incident laser beam 110 in the illuminated pattern repetitions 111.

The focusing optical element 102 and the aspheric lens 101 are shown in Figure 1 separated by a distance which is the sum of corresponding focal lengths 103, 104. Distance 103 refers to corresponding focal length of the aspheric lens 101, and distance 104 refers to corresponding focal length of the focusing optical element 102. Figure 1 shows that the focusing optical element 102 causes the input laser beam 106 to converge 122 in such a way that it is finally focused to corresponding focal point 117.

The focusing optical element 102 and the aspheric lens 101 may be configured to cause the incident laser beam 110 to have a spot size in a range of hundreds of µm. This way, a suitable compromise may be achieved between a small enough area of detection (i.e. small illuminated area) and a sufficient number of illuminated periods, which may be about tenths, hundreds or thousands of periods of the nanostructured array 111 under inspection. For example, the illuminated plurality of pattern repetitions (of the nanostructured array 111) may be suitably comprised between 5 and 5000 periods, depending on the desired application.

In some implementations of the device, the incident laser beam waist 120 may be e.g. of between 0.01 mm and 50 mm, preferably between 0.05 mm and 5 mm, and more preferably between 0.05 mm and 1 mm. This may be achieved by choosing an appropriate waist 119 for the input laser beam 106 and an appropriate configuration for the "inverse" beam expander 121 constituted by the focusing optical element 102 and the aspheric lens 101.

Maximum collection of the light diffracted by the nanostructured array 111 may occur when the distance between the nanostructured array 111 and the aspheric lens 101 (substantially) coincides with a corresponding focal distance 124 of the aspheric lens 111. This focal distance 124 can be different to focal distance 103 at the other side. An aspheric lens can provide different focal distances 103, 124 at both (opposite) sides.

The redirecting optical element 112 may be configured for at least partially transmitting light and at least partially reflecting light. The redirecting optical element 112 may be arranged between the focusing optical element 102 and the aspheric lens 101 for redirecting at least part of the diffracted laser light 201 from the aspheric lens 101 to a magnification lens 114.

The magnification lens 114 may be arranged for magnifying the diffracted laser light 203 from the redirecting optical element 112 and for providing the magnified diffracted laser light 204 to a far field sensing device 115 (e.g. a far field CCD camera). The far field sensing device 115 may be arranged for obtaining a diffraction pattern and comparing the obtained diffraction pattern to a reference diffraction pattern.

Each of the input and incident laser beams 106, 110 may be a paraxial Gaussian beam. Each of the input and incident laser beams 106, 110 may further be a single mode laser with a spectral line width below 1% of its wavelength, which is commonly known as a "spectrally pure laser". Gas lasers and some solid state lasers may provide light with said appropriate characteristics at several wavelengths. In particular, each of the input and incident laser beams 106, 110 may have a suitable wavelength of between 150 nm and 3000 nm.

In some examples, the redirecting optical element 112 may comprise a mirror with a hole arranged for causing the focused input laser beam 118 to pass through the hole towards the aspheric lens 101, and for causing the diffracted laser light 201 from the aspheric lens 101 to be reflected by the mirror towards the magnification lens 114. Alternatively, the redirecting optical element 112 may comprise a first beam splitter.

In examples of the inspecting device, the focusing optical element 102 may be a plano-convex lens arranged for its plane side to receive the input laser beam 106 perpendicularly, and for its convex side to cause focusing of the input laser beam 106 to corresponding focal point 117.

According to some examples, the laser light source 105 for providing the input laser beam 106 may be comprised in the inspecting device. This laser light source 105 may comprise a laser light emitter (not shown), an optical fibre 109, and a collimating optical element 107.

The laser light emitter (not shown) may be arranged for providing an initial laser beam (not shown). The optical fibre 109 may be arranged for guiding the initial laser beam from the laser light emitter towards the collimating optical element 107. The collimating optical element 107 may be arranged for collimating the initial laser beam 108 (from the optical fibre 109) such that the input laser beam 106 is accordingly provided.

The collimating optical element 107 may be an elliptical mirror (reflective element) arranged for reflecting the laser beam 108 from the optical fibre 109 in such a way that it may be reflected as collimated. Alternatively, the collimating optical element 107 may be based on refractive elements such as e.g. lens, microscope objectives, etc. An aspect of the elliptical mirror 107 may be that it does not have chromatic aberration, so different wavelengths (or colours) may be chosen for the input laser beam 106.

The optical fibre 109 may be a single mode optical fibre, which may support the Gaussian mode. Moreover, suitable spatial filtering of the laser output 108 may be achieved automatically by using an appropriate fibre 109. Alternatively, spatial filtering with tenths of µm pinholes and high magnification optical elements may be used for achieving said filtering effect. The magnification optical elements may be based on lens, microscope objectives, etc. An aspect of using the optical fibre 109 may be that a more compact and stable design may be obtained.

When the light source 105 is configured as shown in Figures 1 and 2 (with laser emitter, collimating element 107 and optical fibre 109), two parts of the device may be differentiated and "connected" by the optical fibre 109. A first part 100 dedicated to reduce the waist 119 of the input laser beam 106 and to collect the diffracted light 200 may be placed close to the inspected nanostructured array 111. A second part, the laser emitter (not shown) which may be significantly bulky, may be placed in a "remote" position with respect to the first part 100. An aspect of this configuration may thus be that the device may be easily integrated in a nanofabrication chain to obtain reliable results (since only the first part 100 may be placed very close to the inspected material 111).

In examples of the device, the far field sensing device 115 may also be comprised in the inspecting device. In other words, the far field sensing device 115 may be either internal or external to the inspecting device. The far field sensing device 115 may be configured to perform first and second alternative inspecting methods, as described below.

The first inspecting method may comprise obtaining a diffraction pattern from the magnified diffracted laser light 204 received from the magnification lens 114. The obtained diffraction pattern may comprise a plurality of relative intensities of orders recorded in a single frame. The first inspecting method may further comprise retrieving a plurality of reference diffraction patterns from e.g. a suitable repository (e.g. a database of reference diffraction patterns). The reference diffraction patterns may comprise e.g. numerical models based on solution(s) of Maxwell's equations.

The first inspecting method may still further comprise comparing the relative intensities of orders (of the obtained diffraction pattern) to the numerical models (of the reference diffraction patterns). The first inspecting method may finally conclude, depending on the result of said comparison, that the inspected array has some defect(s) or not, and/or that the inspected array has nanostructures formed with dimensions below the wavelength of the input laser beam 106.

The second inspecting method may comprise obtaining a diffraction pattern from the magnified diffracted laser light 204 received from the magnification lens 114. The obtained diffraction pattern may comprise a first plurality of relative intensities of orders recorded in a single frame. The second inspecting method may further comprise retrieving one or more reference diffraction patterns from e.g. a suitable repository (e.g. a database of reference diffraction patterns).

Each of these retrieved reference diffraction patterns may comprise a second plurality of relative intensities of orders in a single frame previously obtained (e.g. in previous executions of the second inspecting method). Several iterations may thus be performed for comparing a current frame obtained in a current iteration to a previous frame obtained in a previous iteration.

The second inspecting method may still further comprise comparing the first relative intensities of orders (of the obtained diffraction pattern) to the second relative intensities of orders (of at least one of the reference diffraction patterns). The second inspecting method may finally conclude, depending on the result of said comparison, that the inspected array has some defect(s) or not, and/or that the inspected array has nanostructures formed with dimensions below the wavelength of the input laser beam 106.

In both first and second inspecting methods, the conclusion produced by the method may be based on how much the compared items match. At least some mismatch(s) may be determined if e.g. a discrepancy or error threshold is exceeded. Known statistics techniques may be used to perform such analysis, for example. In the case of mismatch(s), the method may then produce e.g. detailed information about where defects/formations are located in the inspected array and/or qualitative information about said defects/formations, etc.

First and second inspecting methods may be implemented through corresponding computer instructions in the context of a computer program. One or more executable versions of this computer program may be stored in a memory. A processor may retrieve one of the executable versions from memory and execute it for implementing the inspection method (either the first or second method). The processor may be fast enough for satisfying time requirements imposed by a corresponding nanofabrication chain.

The memory and/or the processor may be internal or external to the sensing device 115. For example, the sensing device 115 may have the single role of sensing the received light 204 and sending suitable signals to an external computer system comprising such a memory and processor. This computer system may then execute the corresponding computer program for performing either the first or second inspecting method. Alternatively, the sensing device 115 may comprise all the necessary means (memory and processor) for performing the first and/or second inspecting methods.

In some examples where the redirecting optical element 112 is a beam splitter, the inspecting device may comprise a second beam splitter 113 arranged between the focusing optical element 102 and the aspheric lens 101 for redirecting at least part of the diffracted laser light 202 from the aspheric lens 101 towards an image capturing device 116 (e.g. a CCD camera). This image capturing device 116 may be arranged for imaging the at least part of the diffracted laser light 205 (from the second beam splitter 113) and displaying it on a display. The image capturing device 116 may be comprised in the inspecting device or may be external.

Displaying the diffracted laser light 205 on a display may be useful during e.g. tuning operations of the inspecting device, testing of new/updated software for analysing obtained diffraction pattern(s), etc. For example, visualization of diffraction patterns (obtained by the camera 115) and the diffracted laser light 205 (imaged by the camera 116) may permit an operator to verify visually at least some effect(s) of tuning actions, how well formation/defectivity of nanostructures are detected by a software under test, etc.

According to some implementations, the inspecting device may further comprise a linear polarizer 123 arranged for linearly polarizing the input laser beam 106. In examples of the inspecting device, each of the first (or input) and second (or incident) laser beams 106, 110 may be a visible, infrared or ultraviolet light laser beam (i.e. a laser beam having a wavelength of between 150 nm and 3000 nm).

Periodic structures with periodicities in the range of 1 to 10 µm have been experimentally inspected with reproducible results by using examples of the device with a visible, infrared or ultraviolet light (wavelength between 150 nm and 3000 nm) for the input laser beam 106, and a linear polarizer 123 polarizing the input laser beam 106.

It has been experimentally verified that at least some of the previously described devices may be suitable for inspecting arrays of nanostructures with periodic repetitions of a pattern 111 with periodicities between 300 nm and 60 µm.

For reasons of completeness, various aspects of the present disclosure are set out in the following numbered clauses:
1. A device for inspecting an array of nanostructures with periodic repetitions of a pattern, the device comprising:
   a focusing optical element arranged for focusing a first paraxial, collimated laser beam with a first waist to a focal point;
   an aspheric lens arranged for
   transforming the focused first laser beam into a second paraxial, collimated laser beam with a waist smaller than the first waist for illuminating a plurality of the pattern repetitions, and for
   collecting a diffracted laser light caused by diffraction of the second laser beam in the illuminated pattern repetitions;
   a redirecting optical element, which is configured for at least partially transmitting light and at least partially reflecting light, arranged between the focusing optical element and the aspheric lens for redirecting at least part of the diffracted laser light from the aspheric lens to a far field sensing device for obtaining a diffraction pattern and comparing the obtained diffraction pattern to a reference diffraction pattern.
2. A device according to clause 1, further comprising a magnification lens arranged for magnifying the at least part of the diffracted laser light from the redirecting optical element and for providing it to the far field sensing device.
3. A device according to any of clauses 1 or 2, wherein each of the first and second laser beams is a Gaussian single mode laser beam.
4. A device according to any of clauses 1 to 3, wherein each of the first and second laser beams has a line width below 1 % of its wavelength.
5. A device according to any of clauses 1 to 4, further comprising a laser light source for providing the first laser beam.
6. A device according to clause 5, wherein the laser light source comprises:
   a laser light emitter arranged for providing an initial laser beam;
   an optical fibre arranged for guiding the initial laser beam from the laser light emitter towards a collimating optical element; and
   the collimating optical element arranged for collimating the initial laser beam from the optical fibre such that the first laser beam is provided.
7. A device according to clause 6, wherein the collimating optical element is an elliptical mirror.
8. A device according to any of clauses 6 or 7, wherein the optical fibre is a single mode optical fibre.
9. A device according to any of clauses 1 to 8, wherein the aspheric lens has a numerical aperture of between 0.18 and 1.00, preferably between 0.18 and 0.86.
10. A device according to any of clauses 1 to 9, wherein the focusing optical element is a piano-convex lens.
11. A device according to any of clauses 1 to 10, further comprising the far field sensing device.
12. A device according to clause 11, wherein the far field sensing device is configured in such a way that:
   the obtained diffraction pattern comprises a plurality of relative intensities of orders recorded in a single frame;
   the reference diffraction pattern comprises a plurality of numerical models based on a solution of Maxwell's equations; and
   the relative intensities of orders of the obtained diffraction pattern are compared to the numerical models of the reference diffraction pattern.
13. A device according to clause 11, wherein the far field sensing device is configured in such a way that:
   the obtained diffraction pattern comprises a first plurality of relative intensities of orders recorded in a single frame;
   the reference diffraction pattern comprises a second plurality of relative intensities of orders in another frame recorded at a different time; and
   the first relative intensities of orders are compared to the second relative intensities of orders.
14. A device according to any of clauses 1 to 13, further comprising a linear polarizer arranged for linearly polarizing the first laser beam.
15. A device according to any of clauses 1 to 14, wherein each of the first and second laser beams is a visible, infrared or ultraviolet light laser beam.
16. A device according to any of clauses 1 to 15, wherein the second laser beam has a waist of between 0.01 mm and 50 mm, preferably between 0.05 mm and 5 mm, and preferably between 0.05 mm and 1 mm.
17. A device according to any of clauses 1 to 16, wherein the illuminated plurality of pattern repetitions comprises between 5 and 5000 periods.
18. A device according to any of clauses 1 to 17, wherein the periodic pattern repetitions have a periodicity between 300 nm and 60 µm.
19. A device according to any of clauses 1 to 18, wherein the redirecting optical element comprises a mirror with a hole arranged for causing the focused first laser beam to pass through the hole towards the aspheric lens, and for causing the diffracted laser light from the aspheric lens to be reflected by the mirror.
20. A device according to any of clauses 1 to 18, wherein the redirecting optical element comprises a first beam splitter.
21. A device according to clause 20, further comprising:
   a second beam splitter arranged between the focusing optical element and the aspheric lens for redirecting at least part of the diffracted laser light from the aspheric lens towards an image capturing device for imaging it for displaying it on a display.
22. A device according to clause 21, further comprising the image capturing device.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A device for inspecting an array of nanostructures with periodic repetitions of a pattern, the device comprising:
a focusing optical element arranged for focusing a first paraxial, collimated laser beam with a first waist to a focal point;
an aspheric lens arranged for
transforming the focused first laser beam into a second paraxial, collimated laser beam with a waist smaller than the first waist for illuminating a plurality of the pattern repetitions, and for
collecting a diffracted laser light caused by diffraction of the second laser beam in the illuminated pattern repetitions;
a redirecting optical element, which is configured for at least partially transmitting light and at least partially reflecting light, arranged between the focusing optical element and the aspheric lens for redirecting at least part of the diffracted laser light from the aspheric lens to a far field sensing device for obtaining a diffraction pattern and comparing the obtained diffraction pattern to a reference diffraction pattern.

2. A device according to claim 1, further comprising a magnification lens arranged for magnifying the at least part of the diffracted laser light from the redirecting optical element and for providing it to the far field sensing device.

3. A device according to any of claims 1 or 2, wherein each of the first and second laser beams is a Gaussian single mode visible, infrared or ultraviolet light laser beam.

4. A device according to any of claims 1 to 3, wherein each of the first and second laser beams has a line width below 1 % of its wavelength.

5. A device according to any of claims 1 to 4, further comprising a laser light source for providing the first laser beam.

6. A device according to claim 5, wherein the laser light source comprises:
a laser light emitter arranged for providing an initial laser beam;
an optical fibre arranged for guiding the initial laser beam from the laser light emitter towards a collimating optical element; and
the collimating optical element arranged for collimating the initial laser beam from the optical fibre such that the first laser beam is provided.

7. A device according to claim 6, wherein the collimating optical element is an elliptical mirror.

8. A device according to any of claims 1 to 7, wherein the aspheric lens has a numerical aperture of between 0.18 and 1.00, preferably between 0.18 and 0.86.

9. A device according to any of claims 1 to 8, wherein the focusing optical element is a piano-convex lens.

10. A device according to any of claims 1 to 9, further comprising the far field sensing device.

11. A device according to claim 10, wherein the far field sensing device is configured in such a way that:
the obtained diffraction pattern comprises a plurality of relative intensities of orders recorded in a single frame;
the reference diffraction pattern comprises a plurality of numerical models based on a solution of Maxwell's equations; and
the relative intensities of orders of the obtained diffraction pattern are compared to the numerical models of the reference diffraction pattern.

12. A device according to claim 10, wherein the far field sensing device is configured in such a way that:
the obtained diffraction pattern comprises a first plurality of relative intensities of orders recorded in a single frame;
the reference diffraction pattern comprises a second plurality of relative intensities of orders in another frame recorded at a different time; and
the first relative intensities of orders are compared to the second relative intensities of orders.

13. A device according to any of claims 1 to 12, further comprising a linear polarizer arranged for linearly polarizing the first laser beam.

14. A device according to any of claims 1 to 13, wherein the redirecting optical element comprises a mirror with a hole arranged for causing the focused first laser beam to pass through the hole towards the aspheric lens, and for causing the diffracted laser light from the aspheric lens to be reflected by the mirror.

15. A device according to any of claims 1 to 14, wherein the redirecting optical element comprises a beam splitter.
